# EUROPEAN PATENT APPLICATION

(11) **EP 4 385 883 A1**
(43) Date of publication of application: **19.06.2024**
(21) Application number: 23215369.2
(22) Date of filing: 08.12.2023
(51) Int. Cl.: B64C 1/14, B64C 1/12, B64C 1/36

(54) **REMOVABLE AND RECONFIGURABLE PLUG BREAKS OR FEED THROUGH PANELS**

(30) Priority: 16.12.2022 GB 202219057
(71) Applicant: Raytheon Systems Limited, Essex CM17 9NA (GB)
(72) Inventor: BARON, Laurence, Harlow, CM17 9NA (GB)
(74) Representative: Dentons UK and Middle East LLP

(57) **Abstract**

There is provided a method for retrofitting an aircraft with a removable panel (10) comprising one or more of a connector (12) and a feedthrough extending through the panel (12), and a connection assembly (1) for fitting to an aircraft using the method. By providing a number of removable pre-made panels (10), each having different configurations of connectors (12) and/or feedthroughs, the connection assembly (1) allows the aircraft to which it is fitted to be conveniently reconfigured to support new equipment. Accordingly, there is also provided a structure forming at least part of the fuselage of an aircraft, the structure comprising the connection assembly (1), and a method for modifying such an aircraft having the connection assembly (1).

## Description

The invention relates to a method for retrofitting an aircraft, a method for modifying an aircraft, a connection assembly for attaching to a fuselage of an aircraft, and an aircraft comprising the connection assembly.

### Background

As air-based communication and sensing technologies have developed, aircraft have increasingly found use in a number of specialised fields. For example, development of specialist antennas has seen aircraft adapted as airborne communications platforms. Furthermore, developments in sensing equipment such as LiDAR have enabled aircraft to perform wide area mapping, forestry and environmental analysis, disaster monitoring and route planning. Similarly, multispectral and hyperspectral imaging modalities have proven valuable for plant and foliage monitoring, water quality assessment and chemical detection, and disturbed earth and change detection, for example. As demand for these capabilities has grown with the technological improvements, as has a demand for specialised aircraft to perform these functions. However, operating a fleet of individually specialised aircraft is not always economically viable or environmentally friendly. There is therefore a need for aircraft designs that allow quick and easy reconfiguration of the aircraft's operational capability to suit a specific task.

Sensing and communication equipment, such as those described above, are typically required to be fitted to the outside of an aircraft, while the control systems, data processing systems, power sources, and operator interfaces are housed in the interior of the aircraft fuselage. However, connecting cables and wiring from external equipment to the inside of an aircraft fuselage poses a challenge for structural engineers to ensure the integrity of the structure is not compromised. This challenge is magnified in the case of pressurised aircraft, in which the pressure seal of the fuselage must be maintained as the wiring is passed through the fuselage skin. Furthermore, changes and increases in external equipment often cause difficulties in expanding existing and adding additional fuselage penetrations.

A lack of standardised connection types between all potential pieces of external equipment means that the above problem cannot be adequately solved by permanent connectors sealed through the fuselage skin. Such permanent connectors or feed throughs requiring lengthy removal activities as the connectors are sealed in place with sealing compound. Moreover, a detailed structural analysis is required each time these fixed connections are changed to suit a new piece of external equipment to ensure the structural integrity of the aircraft is maintained.

There is therefore a need for a connection assembly that can be quickly and easily reconfigured to a given set of external equipment.

### Summary

According to a first embodiment of the invention, there is provided a method for retrofitting an aircraft, the method comprising identifying a suitable location in a skin of a fuselage of the aircraft; removing a section of the skin at the location to form a first opening; attaching a doubler plate around the opening, the doubler plate comprising a second opening; removably coupling a panel to the doubler plate such that the panel occludes the second opening, wherein the panel comprises one or more of a first connector extending therethrough and/or a feed through hole extending therethrough. Using this method, an aircraft is provided with a removeable coupling panel that can quickly and easily be swapped for a different coupling panel having different connection types to adapt the aircraft to a given operational capability without any recourse to structural design and analysis. Furthermore, the seal that is broken to change the connection type is moved away from the connector or feedthrough hole itself to the interface of the doubler plate and the coupling panel, providing a far more reliable and resilient weather and pressure seal. Preferably, the doubler plate is irremovably coupled to an external surface of the aircraft to provide a solid mechanical foundation for the remaining components of the connection assembly
Identifying a suitable location in accordance with the first embodiment may further comprise identifying a location in proximity to a structural feature of the fuselage, wherein the structural feature comprises either a stringer or a former, and wherein attaching a doubler plate around the opening comprises attaching the doubler plate to the structural feature. Coupling the doubler plate to the fuselage frame in this way improves the structural integrity of the resultant aircraft by ensuring that the doubler plate is coupled to a rigid structural feature of the aircraft. In addition or alternatively, further considerations when identifying a suitable location in which to install the connection assembly may be: proximity to mounting points on the exterior of the aircraft for external equipment; proximity to electrical connections on the interior of the aircraft for receiving signals form external equipment; the centre of gravity of the aircraft and the need to balance the aircraft for flight; proximity to flight control cables, internal wiring, air conditioning ducts, and other aircraft equipment, for example.

In addition or alternatively, the doubler plate of the first embodiment may be a first doubler plate, and the method of the first embodiment may further comprise attaching a second doubler plate around the opening, wherein the first doubler plate is coupled to an external surface of the fuselage, and wherein the second doubler plate is coupled to an internal surface of the fuselage. Using two doubler plates in this way further strengthens the resultant aperture in the aircraft fuselage by increasing the thickness of material around the aperture, while also improving the seal by increasing the overlapping surface area between the doubler plates and panel.

In addition, one or more of the first and second doubler plate of the first embodiment may be removably coupled to the fuselage, and wherein removably coupling the panel comprises sandwiching the panel between the first and second doubler plates. Using this arrangement, both the weather and pressure sealing capabilities of the connection assembly are improved. Preferably, one of the doubler plates is irremovably coupled the aircraft to reinforce the fuselage skin around the hole and provide a solid mechanical foundation for the remaining components of the connection assembly, while the other doubler plate is removably coupled to it. In a further preferred embodiment, the first doubler plate is irremovably coupled to an external surface of the aircraft fuselage, while the second doubler plate is removable coupled to an internal surface of the fuselage for ease of access when removing and changing the panel.

In addition, one of the first and second doubler plates of the first embodiment may comprise one or more captive nuts, and wherein removably coupling the panel further comprises threading the one or more captive nuts onto one or more corresponding bolts coupled to the other of the first or second doubler plate. The use of captive nuts ensures that the required mechanical fixtures are always retained with the doubler plate while allowing a simple and strong mechanical connection between the doubler plates and the panel. Alternatively, any suitable non-permanent coupling means, for example nuts, bolts, screws, studs, and pins, can be used.

In addition or alternatively, removing a section of the skin as part of the first embodiment may comprise cutting a section out of the skin to form the first opening, thus allowing the connection assembly to be installed in any suitable section of the aircraft fuselage without requiring an existing opening.

In addition or alternatively, the method of the first embodiment may further comprises positioning a re-usable seal between the first and/or second doubler plate and the panel to provide one or more of a weather seal and/or a pressure seal, thereby ensuring that the panel can be removed and replaced without compromising the fuselage's weather and/or pressure seal.

In addition or alternatively, the first opening according to the first embodiment of the invention may have dimensions of at least 5cm by 5cm up to 25.5cm by 25.5cm. Preferably, the first opening may have dimensions of approximately 15cm x 10cm. As will be appreciated, larger openings are harder to seal and present a greater structural challenge to install. The inventors have discovered that a size of approximately 15cm x 10cm provides enough surface area on the plate to install a wide variety of connector types and through holes, while still providing a strong seal and without compromising the structural integrity of the fuselage.

In addition or alternatively, the method of the first embodiment may further comprise: installing an electrical distribution system in the aircraft, the distribution system being connected to an electrical system of the aircraft; installing a patch bay, the patch bay being electrically connected to the distribution system, the patch bay comprising a second electrical connector configured for electrical communication and/or for providing power, and wherein the second electrical connector is compatible with the first connector.

The use of an electrical distribution system and a patch bay providing a variety of electrical connectors each compatible with the variety of connectors provided by a range of panels allows signals from the external equipment to be conveniently connected to the electrical systems of the aircraft, for example allowing communication signals from removeable specialist antennas to be connected to the communication system of the aircraft. Similarly, such a system allows for the external equipment to be quickly and easily connected to the power supply of the aircraft to power the external equipment. Alternatively or additionally, where multiple panels are retrofitted to an aircraft in accordance with the method of the first embodiment of the invention, each panel can be associated with its own patch bay, wherein each patch bay is connected to one central distribution system. Alternatively, each of the multiple panels may be associated with its own patch bay and electrical distribution system.

According to a second embodiment of the invention, there is provided a method for modifying an aircraft, wherein the aircraft comprises a first opening in a skin of the fuselage of the aircraft and a doubler plate attached around the first opening, the doubler plate comprising a second opening, the method comprising: selecting one of a plurality of panels, wherein each of the plurality of panels provides one or more of a first connector extending therethrough and/or a feed through hole extending therethrough, wherein each panel provides a different connection type and/or feed through type; and removably attaching the panel to the doubler plate, such that the panel occludes and seals the second opening. Using this method, an aircraft can be quickly and easily reconfigured to suit a specific operational capability. Furthermore, the seal that is broken to reconfigure the aircraft is moved away from the connector or feedthrough hole itself to the interface of the doubler plate and the coupling panel, providing a far more reliable and resilient weather and pressure seal as the connector or feedthrough hole can be provided with a solid, permanent seal.

According to a third embodiment of the invention, there is provided a connection assembly for attaching to a fuselage of an aircraft, the connection assembly comprising: a doubler plate attachable around a first opening in a skin of a fuselage of an aircraft, the doubler plate having a second opening; a panel configured to be removably attached to the doubler plate, wherein the panel occludes the second opening when coupled to the doubler plate; and one or more of a first connector extending through the panel and/or a feed through hole extending through the panel. By positioning the connectors and/or feedthrough holes required for external equipment on a removeable panel (rather than directly in the skin of the fuselage), the connection assembly allows the connection type to be quickly and easily changed by swapping out a given removeable panel for one carrying the correct connection type, thereby allowing the aircraft to be quickly adapted to a desired operational capability without any recourse to structural design and analysis. Furthermore, the seal that is broken to change the connection type is moved away from the connector or feedthrough hole itself to the interface of the doubler plate and the coupling panel, providing a far more reliable and resilient weather and pressure seal.

In addition, the doubler plate of the third embodiment of the invention may be attached or attachable to a structural feature of the fuselage, wherein the structural feature comprises either a stringer or a former. Coupling the doubler plate to the fuselage frame in this way improves the structural integrity of the resultant aircraft by ensuring that the doubler plate is coupled to a rigid structural feature of the aircraft.

In addition or alternatively, the doubler plate of the third embodiment of the invention may be a first doubler plate, and the assembly may further comprise a second doubler plate, wherein the first doubler plate is attached or attachable to an external surface, and wherein the second doubler plate is attached or attachable to an internal surface of the fuselage around the first opening. Using two doubler plates in this way further strengthens the resultant aperture in the aircraft fuselage by increasing the thickness of material around the aperture.

In addition or alternatively, the first and second doubler plate of the first or third embodiment of the invention may be shaped differently, such that the first doubler plate may be sized to extend between and overlap with a plurality of the structural features of the fuselage, and wherein the second doubler plate may be sized to fit between a plurality of the structural features of the fuselage. This arrangement improves the structural integrity of the connection assembly once installed in the aircraft as the assembly can be anchored to rigid structural features of the aircraft using the outer doubler plate, while still allowing the inner plate to meet the sizing requirements of the given installation location.

In addition or alternatively, one of the first and second doubler plates of the third embodiment of the invention may comprise one or more captive nuts configured to mate with one or more corresponding bolts coupled to the other of the first or second doubler plate. The use of captive nuts ensures that the required mechanical fixtures are always retained with the doubler plate while allowing a simple and strong mechanical connection between the doubler plates and the panel. Alternatively, any suitable non-permanent coupling means, for example nuts, bolts, screws, studs, and pins, can be used.

In addition or alternatively, the panel of any of the disclosed embodiments of the invention may be configured to be sandwiched between the first and second doubler plates. Using this arrangement, both the weather and pressure sealing capabilities of the connection assembly are improved.

Additionally or alternatively, the connection assembly of the third embodiment may further comprise an electrical distribution system connected or connectable to an electrical system of the aircraft, and a patch bay electrically connected to the distribution system and comprising a second electrical connector configured for electrical communication and/or providing power, and wherein the second electrical connector is compatible with the first connector. The use of an electrical distribution system and a patch bay providing a variety of electrical connectors each compatible with the variety of connectors provided by a range of panels allows signals from the external equipment to be conveniently connected to the electrical systems of the aircraft, for example allowing communication signals from removeable specialist antennas to be connected to the communication system of the aircraft. Similarly, such a system allows for the external equipment to be quickly and easily connected to the power supply of the aircraft to power the external equipment. Alternatively or additionally, in the case of an aircraft fitted with multiple connection assemblies of the third embodiment of the invention, each connection assembly may be associated with its own patch bay, wherein each patch bay is connected to one central distribution system. Alternatively, each of the multiple connection assemblies may be associated with its own patch bay and electrical distribution system.

Additionally or alternatively, the third embodiment of the invention may further comprise a re-usable seal positioned between the first and/or second doubler plate and the panel configured to provide one or more of a pressure seal and/or a weather seal, thereby ensuring that the panel can be removed and replaced without compromising the fuselage's weather and/or pressure seal.

According to a fourth embodiment of the invention, there is provided an aircraft having been retrofitted according to the method of the first embodiment or comprising the connection assembly of the third embodiment. Optionally, the doubler plate may be attached around a first opening in the underside of the fuselage to provide a convenient connection in proximity to equipment mounted on the underside of the aircraft.

In addition or alternatively, the first and/or second connector of any previously described embodiment may be configured for connection to a sensor. Optionally, the sensor may comprise one or more of: an antenna, LiDAR, RADAR, a hyperspectral camera, and/or a multispectral camera. As described above, modifying an aircraft to carry one or more of these pieces of external equipment can be useful for carrying out wide area mapping, forestry and environmental analysis, disaster monitoring, route planning, plant and foliage monitoring, water quality assessment and chemical detection, and disturbed earth and change detection, for example.

### Brief Description of the Drawings

By way of example only, a description is now given with reference to the accompanying drawings, in which:
Figure 1 shows an external view of a connection assembly installed in a portion of a fuselage of an aircraft;
Figure 2 show an internal view of a connection assembly installed in a portion of a fuselage of an aircraft;
Figure 3 shows a schematic illustration of an electrical distribution system and patch bay in accordance with the present invention.

### Detailed Description

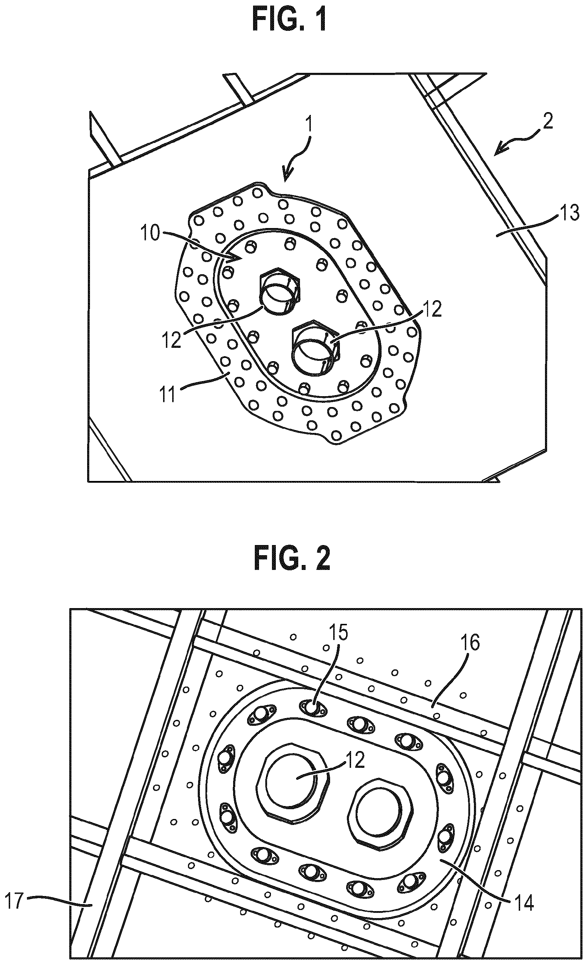

Figure 1 shows an external view of a connection assembly 1 in accordance with the present invention installed in a section of a fuselage 2 of an aircraft. Connection assembly 1 comprises a first doubler plate 11 coupled to the skin 13 of the fuselage 2, and a panel 10 coupled to the first doubler plate. As will be appreciated by those skilled in the art, a doubler plate is a plate of material attached to the skin of an aircraft (or any other structure) to increase the thickness of material at the attachment location, and may typically be used for reinforcement and/or to provide additional mechanical connections to other components. The first doubler plate is coupled to the fuselage around an opening cut out of the fuselage skin 13, the doubler plate being used to reinforce the area of fuselage skin 13 around the opening and providing a solid base to which the panel can be coupled. The doubler plate can be coupled to the fuselage via any suitable permanent attachment means, including riveting, welding, soldering, and brazing etc.

The opening in fuselage 2 surrounded by the first doubler plate 11 is sealed by panel 10 comprising one or more connectors 12 or feed throughs that allow for quick and convenient connection of external equipment. As can be seen from figure 2, connectors 12 extend through the panel 10, allowing electrical and/or mechanical connections from externally mounted equipment to be passed through the fuselage skin to the interior of the aircraft. Panel 10 is removably coupled to the doubler plate 11, and can be premade with any combination of connectors 12 or feedthroughs. Furthermore, both the size of the opening and the size of the connection assembly can be standardised such that individual panels 10 can be quickly swapped to support a change in the external equipment as the aircraft is adapted to specific operational capabilities. By providing dedicated and standardised connection locations in this way with interchangeable panels 10, an aircraft can be quickly adapted to a role without recourse to structural design and analysis.

In the illustrated example, panel 10 can be coupled to doubler plate 11 using any suitable removable coupling means. Preferably, fixed nuts (also known as anchor nuts) may be coupled to the inside face of doubler plate 11, and corresponding bolts may be fed through panel 10 to anchor panel 10 to doubler plate 11. Fixed mechanical fixtures, such as the fixed nuts described above, are preferred to prevent fixtures being lost when the panel is removed. Missing fixtures can be a particular issue in an aircraft as the lost fixture may become foreign object debris (FOD), which will need to be found and removed before the aircraft can be flown again.

If the disclosed connection assembly is to be used with a pressurised aircraft fuselage, the seal between the panel 10 and doubler plate 11 can be improved by the use of re-useable seals (not shown) between the panel 10 and doubler plate 11. Additionally or alternatively, the re-useable seals can provide a weather seal.

Figure 2 shows a view of the connection assembly 1 from an interior of the aircraft fuselage 2. As illustrated, connection assembly 1 may further comprise a second doubler plate 14 configured to couple to an interior surface of the fuselage to further strengthen the area of the fuselage 2 surrounding the opening. In this configuration, the panel 10 is sandwiched between the first doubler plate 11 and second doubler plate 14 to both provide a strong mechanical connection to the panel 10 and to improve the seal formed by the connection assembly by providing an increased overlapping surface area between the panel 10 and the two doubler plates. To facilitate removal of the panel 10 as the aircraft is reconfigured, the second doubler plate 14 is removably coupled to the first doubler plate 11 and to the aircraft fuselage 2 using any suitable non-permanent coupling means, for example nuts, bolts, screws, studs, and pins. In the embodiment illustrated in figure 2, the first doubler plate 11 may comprise a plurality of fixed nuts configured to mate with corresponding bolts coupled to the second doubler plate 14. In this configuration, the bolts may be fed through second doubler plate 11 and panel 10, before being anchored to the fixed nuts in first doubler plate 11.

As can be seen from figures 1 and 2, the first doubler plate 11 and second doubler plate 14 may be sized and shaped differently. In particular, depending on the location in the fuselage 2 at which the connection assembly is installed, the second doubler plate 14 may be constrained by structural features of the fuselage, for example formers 17 and stringers 16. Therefore, in the illustrated example of figure 2, the second doubler plate 14 is sized to fit within these structural features. However, in this situation and as shown in figures 1 and 2, the first doubler plate can be sized and shaped to take advantage of these structural features to improve the structural integrity of the fuselage and resultant connection assembly. In particular, the first doubler plate 11 can be sized to overlap with one or more of the stringers and/or formers of the aircraft fuselage and can be permanently coupled to them, for example using rivets. This ensures a structurally integral coupling between the first doubler plate 11 and the fuselage 2, and ensures that the first doubler plate 11 provides a solid and reliable base for the remaining components of the connection assembly 1.

In view of this, proximity to one or more structural features of the fuselage 2 can be a consideration when identifying a suitable location when retrofitting the connection assembly 1 in an existing aircraft. In addition or alternatively, further considerations when identifying a suitable location in which to install the connection assembly 1 may be: proximity to mounting points on the exterior of the aircraft for external equipment; proximity to electrical connections on the interior of the aircraft for receiving signals form external equipment; the centre of gravity of the aircraft and the need to balance the aircraft for flight; proximity to flight control cables, internal wiring, air conditioning ducts, and other aircraft equipment, for example. In many situations, particularly for imaging and sensing operations, external sensing equipment is mounted on the underside of the fuselage. Examples of such sensing equipment include: antennae, LiDAR, RADAR, hyperspectral cameras, and multispectral cameras. In such situations, the connection assembly 10 can be mounted on the underside of the fuselage 2 in proximity to the external equipment to minimise the required external cabling to reach the connectors 12. As will be appreciated, there is no requirement that the connection assembly 1 be mounted on the underside of the fuselage. Moreover, multiple connection assemblies can be installed in multiple locations on the aircraft to suit the operational requirements of the aircraft.

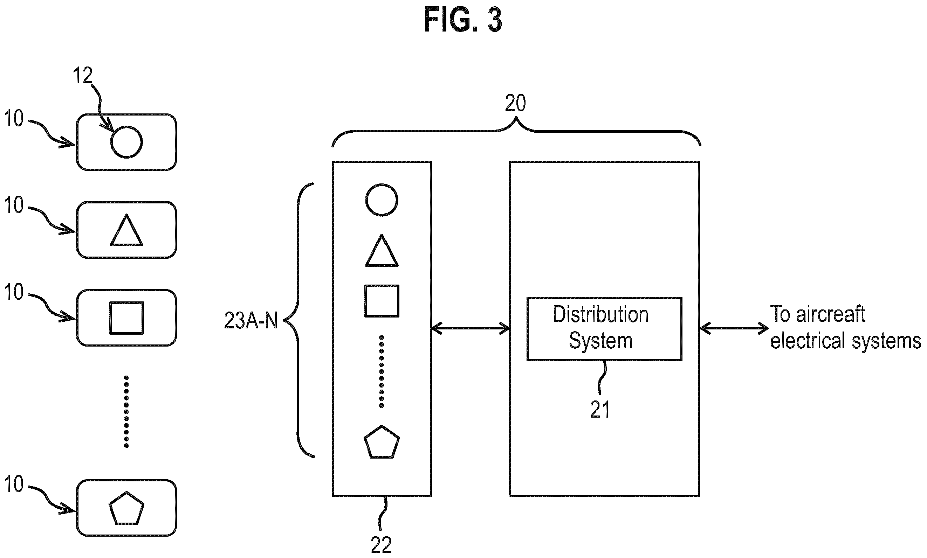

To facilitate electrical connection of a wide range of external equipment with the electrical systems of the aircraft, the connection assembly may further comprise an electrical connection assembly 20, as shown in figure 3, installed in the interior of the aircraft. As can be seen from figure 3, electrical connection assembly comprises an electrical distribution system 21 and a patch bay 22. Electrical distribution system 21 receives signals from the patch bay and distributes them to the appropriate electrical systems of the aircraft. Patch bay 22 is electrically connected to distribution system 21, and comprises one or more electrical connections 23A-N. As illustrated, each of connections 23A-N provides a distinct connection type configured for connection to a different piece of external equipment, and as such each connection 23A-N is compatible with the connector 12 of at least one interchangeable panel 10. Each connection 23A-N can be configured for one or more of electrical communication with external equipment, and for supplying power to external equipment. In this way, the electrical connection assembly 20 further facilitates the reconfigurability of the aircraft having the connection assembly 1 by enabling quick and easy electrical connection to a wide variety of equipment.

Furthermore, depending on the size of the aircraft and the required operational capabilities, a retrofitted aircraft may comprise one centrally located electrical connection system 20 to receive connections from one or more connection assemblies 1 fitted to the aircraft. Alternatively or additionally, in the case of an aircraft fitted with multiple connection assemblies 1, each connection assembly 1 may be associated with its own patch bay 22, wherein each patch bay is connected to one central distribution system. Alternatively, each of the multiple connection assemblies 1 may be associated with its own electrical connection assembly 20.

### Embodiments

1. A method for retrofitting an aircraft, the method comprising:
   identifying a suitable location in a skin of a fuselage of the aircraft;
   removing a section of the skin at the location to form a first opening;
   attaching a doubler plate around the opening, the doubler plate comprising a second opening;
   removably coupling a panel to the doubler plate such that the panel occludes the second opening, wherein the panel comprises one or more of a first connector extending therethrough and/or a feed through hole extending therethrough.
2. The method of embodiment 1, wherein identifying a suitable location comprises identifying a location in proximity to a structural feature of the fuselage, wherein the structural feature comprises either a stringer or a former, and wherein attaching the doubler plate around the opening comprises attaching the doubler plate to the structural feature.
3. The method of embodiment 1 or embodiment 2, wherein the doubler plate is a first doubler plate, and wherein the method further comprises attaching a second doubler plate around the opening, wherein the first doubler plate is coupled to an external surface of the fuselage, and wherein the second doubler plate is coupled to an internal surface of the fuselage.
4. The method of embodiment 3, wherein one or more of the first and/or second doubler plate is removably coupled to the fuselage, and wherein removably coupling the panel comprises sandwiching the panel between the first and second doubler plates.
5. The method of embodiment 4, wherein one of the first and second doubler plates comprises one or more captive nuts, and wherein removably coupling the panel further comprises threading the one or more captive nuts onto one or more corresponding bolts coupled to the other of the first or second doubler plate.
6. The method of any preceding embodiment, wherein removing a section of the skin comprises cutting a section out of the skin to form the first opening.
7. The method of any preceding embodiment, further comprising positioning a re-usable seal between the doubler plate and the panel to provide one or more of a weather seal and/or a pressure seal.
8. The method of any preceding embodiment, wherein the first opening has dimensions of approximately 15cm x 10cm.
9. The method of any preceding embodiment, further comprising:
   installing an electrical distribution system in the aircraft, the distribution system being connected to an electrical system of the aircraft;
   installing a patch bay, the patch bay being electrically connected to the distribution system, the patch bay comprising a second electrical connector configured for electrical communication and/or for providing power, and wherein the second electrical connector is compatible with the first connector.
10. A method for modifying an aircraft, wherein the aircraft comprises a first opening in a skin of the fuselage of the aircraft and a doubler plate attached around the first opening, the doubler plate comprising a second opening, the method comprising:
   selecting one of a plurality of panels, wherein each of the plurality of panels provides one or more of a first connector extending therethrough and/or a feed through hole extending therethrough, wherein each panel provides a different connection type and/or feed through type; and
   removably attaching the panel to the doubler plate, such that the panel occludes and seals the second opening.
11. A connection assembly for attaching to a fuselage of an aircraft, the connection assembly comprising:
   a doubler plate attachable around a first opening in a skin of a fuselage of an aircraft, the doubler plate having a second opening;
   a panel configured to be removably attached to the doubler plate, wherein the panel occludes the second opening when coupled to the doubler plate; and
   one or more of a first connector extending through the panel and/or a feed through hole extending through the panel.
12. The connection assembly of embodiment 11, wherein the doubler plate is attached or attachable to a structural feature of the fuselage, wherein the structural feature comprises either a stringer or a former.
13. The connection assembly of embodiment 11 or embodiment 12, wherein the doubler plate is a first doubler plate, and wherein the assembly further comprises a second doubler plate, wherein the first doubler plate is attached or attachable to an external surface, and wherein the second doubler plate is attached or attachable to an internal surface of the fuselage around the first opening.
14. The method of embodiment 3 or the connection assembly of embodiment 13, wherein the first doubler plate is sized to extend between and overlap with a plurality of the structural features of the fuselage, and wherein the second doubler plate is sized to fit between a plurality of the structural features of the fuselage.
15. The connection assembly of embodiment 13 or embodiment 14, wherein one of the first and second doubler plates comprises one or more captive nuts configured to mate with one or more corresponding bolts coupled to the other of the first or second doubler plates.
16. The connection assembly of any of embodiments 13 to 15, wherein the panel is configured to be sandwiched between the first and second doubler plates.
17. The connection assembly of any of embodiment 11 to 16, further comprising:
   an electrical distribution system connected or connectable to an electrical system of the aircraft;
   a patch bay electrically connected to the distribution system and comprising a second electrical connector configured for electrical communication and/or providing power, and wherein the second electrical connector is compatible with the first connector.
18. The connection assembly of embodiment 11 to 17, further comprising a re-usable seal positioned between the doubler plate and the panel configured to provide one or more of a pressure seal and/or a weather seal.
19. An aircraft having been retrofitted according to the method of any of embodiments 1 to 9 and/or comprising a connection assembly of any of embodiments 11 to 18.
20. The aircraft of embodiment 19, wherein the doubler plate is attached around a first opening in the underside of the fuselage of the aircraft.
21. The method or assembly of any preceding embodiment, wherein the first and/or second connector is configured for connection to a sensor.
22. The method or assembly of embodiment 18, wherein the sensor comprises one or more of: an antenna, LiDAR, RADAR, a hyperspectral camera, and/or a multispectral camera.

## Claims

1. A method for retrofitting an aircraft, the method comprising:
identifying a suitable location in a skin of a fuselage of the aircraft;
removing a section of the skin at the location to form a first opening;
attaching a doubler plate around the opening, the doubler plate comprising a second opening;
removably coupling a panel to the doubler plate such that the panel occludes the second opening, wherein the panel comprises one or more of a first connector extending therethrough and/or a feed through hole extending therethrough.

2. The method of claim 1, wherein identifying a suitable location comprises identifying a location in proximity to a structural feature of the fuselage, wherein the structural feature comprises either a stringer or a former, and wherein attaching the doubler plate around the opening comprises attaching the doubler plate to the structural feature.

3. The method of claim 1 or claim 2, wherein the doubler plate is a first doubler plate, and wherein the method further comprises attaching a second doubler plate around the opening, wherein the first doubler plate is coupled to an external surface of the fuselage, and wherein the second doubler plate is coupled to an internal surface of the fuselage, and optionally wherein one or more of the first and/or second doubler plate is removably coupled to the fuselage, and wherein removably coupling the panel comprises sandwiching the panel between the first and second doubler plates, and further optionally wherein one of the first and second doubler plates comprises one or more captive nuts, and wherein removably coupling the panel further comprises threading the one or more captive nuts onto one or more corresponding bolts coupled to the other of the first or second doubler plate.

4. The method of any preceding claim, wherein removing a section of the skin comprises cutting a section out of the skin to form the first opening.

5. The method of any preceding claim, further comprising:
installing an electrical distribution system in the aircraft, the distribution system being connected to an electrical system of the aircraft;
installing a patch bay, the patch bay being electrically connected to the distribution system, the patch bay comprising a second electrical connector configured for electrical communication and/or for providing power, and wherein the second electrical connector is compatible with the first connector.

6. A method for modifying an aircraft, wherein the aircraft comprises a first opening in a skin of the fuselage of the aircraft and a doubler plate attached around the first opening, the doubler plate comprising a second opening, the method comprising:
selecting one of a plurality of panels, wherein each of the plurality of panels provides one or more of a first connector extending therethrough and/or a feed through hole extending therethrough, wherein each panel provides a different connection type and/or feed through type; and
removably attaching the panel to the doubler plate, such that the panel occludes and seals the second opening.

7. A connection assembly for attaching to a fuselage of an aircraft, the connection assembly comprising:
a doubler plate attachable around a first opening in a skin of a fuselage of an aircraft, the doubler plate having a second opening;
a panel configured to be removably attached to the doubler plate, wherein the panel occludes the second opening when coupled to the doubler plate; and
one or more of a first connector extending through the panel and/or a feed through hole extending through the panel.

8. The connection assembly of claim 7, wherein the doubler plate is attached or attachable to a structural feature of the fuselage, wherein the structural feature comprises either a stringer or a former.

9. The connection assembly of claim 7 or claim 8, wherein the doubler plate is a first doubler plate, and wherein the assembly further comprises a second doubler plate, wherein the first doubler plate is attached or attachable to an external surface, and wherein the second doubler plate is attached or attachable to an internal surface of the fuselage around the first opening.

10. The method of claim 3 or the connection assembly of claim 9, wherein the first doubler plate is sized to extend between and overlap with a plurality of the structural features of the fuselage, and wherein the second doubler plate is sized to fit between a plurality of the structural features of the fuselage.

11. The connection assembly of claim 9 or claim 10, wherein the panel is configured to be sandwiched between the first and second doubler plates.

12. The connection assembly of any of claims 7 to 11, further comprising:
an electrical distribution system connected or connectable to an electrical system of the aircraft;
a patch bay electrically connected to the distribution system and comprising a second electrical connector configured for electrical communication and/or providing power, and wherein the second electrical connector is compatible with the first connector.

13. The connection assembly of any of claims 7 to 12, further comprising a re-usable seal positioned between the doubler plate and the panel configured to provide one or more of a pressure seal and/or a weather seal.

14. An aircraft having been retrofitted according to the method of any of claims 1 to 5 and/or comprising a connection assembly of any of claims 7 to 13.

15. The method or assembly of any preceding claim, wherein the first and/or second connector is configured for connection to a sensor, and optionally wherein the sensor comprises one or more of: an antenna, LiDAR, RADAR, a hyperspectral camera, and/or a multispectral camera.
